(19) **Europäisches Patentamt**

**European Patent Office**

**Office européen des brevets**

(11) **EP 1 077 543 A1**

(12) **EUROPÄISCHE PATENTANMELDUNG**

(43) Veröffentlichungstag:
**21.02.2001 Patentblatt 2001/08**

(51) Int. Cl.⁷: **H04B 10/105**, H04L 7/04,
H04B 7/208

(21) Anmeldenummer: **00112884.2**

(22) Anmeldetag: **19.06.2000**

(84) Benannte Vertragsstaaten:
**AT BE CH CY DE DK ES FI FR GB GR IE IT LI LU MC NL PT SE**
Benannte Erstreckungsstaaten:
**AL LT LV MK RO SI**

(30) Priorität: **16.08.1999 CH 148899**

(71) Anmelder: **Contraves Space AG**
**8052 Zürich (CH)**

(72) Erfinder:
- **Hunziker, Stephan, Dr.**
  **5025 Asp (CH)**
- **Pribil, Klaus, Dr.**
  **8152 Glattbrugg (CH)**

(74) Vertreter: **Heusch, Christian**
**OK pat AG**
**Patente Marken Lizenzen**
**Hinterbergstrasse 36**
**6330 Cham (CH)**

(54) **Optisches Intersatelliten-Kommunikationssystem zum Aussenden eines modulierten Laserstrahls**

(57)    Das optische Intersatelliten-Kommunikations-system umfasst zwei getrennte Bereiche der Band-breite, derart dass ein erster Bereich für einen Synchronisationskanal mit einer kleinen Bandbreite zur Übertragung von Synchronisationsrahmen mit einer festen Datenrate und ein zweiter Bereich mit einer gros-sen Bandbreite für einen transparenten Link vorgese-hen sind. Die entsprechende Kommunikations-anordnung umfasst einen elektrooptischen Phasenmo-dulator (**81**) zur Modulierung des Laserlichts eines TX-Lasers (**82**) und zur Weiterleitung des modulierten Laserlichts an das eine Ende (**83**) des transparenten Links, das den Laserstrahl (**84**) sendet. An eine Verknüpfungsschaltung (**85**) sind eine sendeseitige Datensignaleinheit (**86**) und eine Syncbit-Einheit (**87**) angeschlossen. Die Verknüpfungsschaltung (**85**) ist ausgangsseitig an einen elektrooptischen-Modulator-Treiber (**88**) angeschlossen, der über einen Linearisie-rer (**89**) mit dem Eingang des elektrooptischen Phasen-modulators (**81**) verbunden ist. Der Linearisierer kompensiert die Intermodulationsprodukte dritter und fünfter Ordnung.

Fig.8

EP 1 077 543 A1

**Beschreibung**

Die vorliegende Erfindung betrifft ein optisches Intersatelliten-Kommunikationssystem nach dem Oberbegriff des Patentanspruchs **1**.

Es sind optische Intersatelliten-Kommunikationssysteme bekannt, die mit digitalen Daten mit einer festen Bitrate von beispielsweise **1.5** GB/s +/- **3**% arbeiten, und es sind auch analoge optische Kommunikationssysteme in vielen Varianten bekannt. Die Impulsform der Signale im Fall des digitalen Systems ist immer in einem engen Toleranzbereich spezifiziert, da sonst das System nicht funktionieren kann. Ein Hauptproblem bei der kohärenten homodynen Übertragung stellt sich bei der Synchronisierung des Lokaloszillatorlasers, dessen Phase für Detektions- und Demodulationszwecke mit der empfangenen Lichtwelle verriegelt oder gelockt werden soll. Bei digitalen Systemen fester Datenrate ergibt sich ein einfachster Weg, um eine Synchronisation zu erreichen, durch Verwendung des sogenannten Syncbit-Verfahrens, bei dem der Datenstrom nach **17** Bits von Nullen" und "Einsen" ein Syncbit enthält, das sich in einem dritten Zustand **"0.5"** befindet.

Es ist nun Zweck der vorliegenden Erfindung, ein verbessertes optisches Intersatelliten-Kommunikationssystem zu schaffen.

Diese Aufgabe wird erfindungsgemäss durch ein optisches Intersatelliten-Kommunikationssystem nach Patentanspruch **1** gelöst.

Das erfindungsgemässe System gestattet demzufolge die Übertragung nahezu beliebiger analoger und digitaler Signale variabler Datenrate bis zu einer bestimmten Bandbreite über optische Intersatelliten-Links, und zwar im Gegensatz zu bekannten Systemen, die nur die Übertragung von digitalen Signalen einer fest gegebenen Datenrate erlauben.

Vorteilhafte Ausgestaltungen der Erfindung sind in den abhängigen Ansprüchen angegeben.

Nachfolgend wird die Erfindung beispielsweise an Hand einer Zeichnung näher erläutert. Dabei zeigen:

**Fig. 1** eine schematische Darstellung eines erfindungsgemässen optischen Intersatelliten-Kommunikationssystems mit einem Sendeteil und einem Empfangsteil,

**Fig. 2** ein Diagramm der Degradation des Signal/Rauschen-Verhältnises in einem solchen Kommunikationssystem,

**Fig. 3** schematische Darstellungen eines Syncbitrahmens in Frequenzbereich und im Zeitbereich,

**Fig. 4** und **5** Blockschaltbilder zur Erläuterung der Multiplexierung verschiedener Subkanäle eines Basisbandkanals bzw. eines Mikrowellenkanals,

**Fig. 6** ein Blockschaltbild einer sogenannten RFE-Schaltung,

**Fig. 7** ein zur Korrektur von Nichtlinearitäten dritter und fünfter Ordnung zu verwendendes Diagramm,

**Fig. 8** ein Blockschaltbild eines optischen Intersatelliten-Kommunikationssystems nach der Erfindung,

**Fig. 9** eine schematische Darstellung zur Erläuterung der Korrektur von Nichtlinearitäten,

**Fig. 10** ein Blockschaitbild einer ersten Schaltung zur Realisierung einer solchen Korrektur,

**Fig. 11** ein Blockschaltbild einer zweiten Schaltung zur Realisierung einer solchen Korrektur, und

**Fig. 12** ein Diagramm zur Optimierung einer solchen Linearitäts-Korrektur.

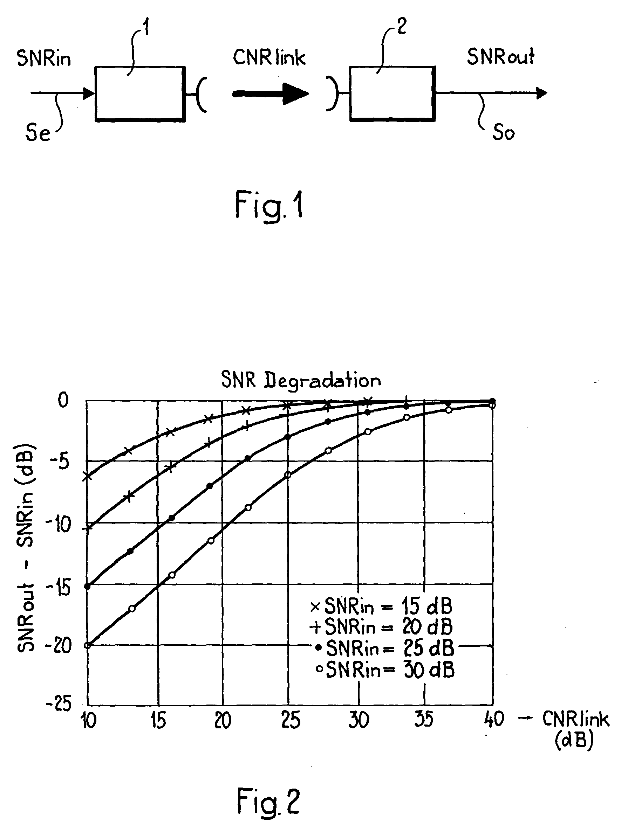

Das analoge System nach **Fig. 1** mit einem Sendeteil **1** und einem Empfangsteil wird wie üblich in Funktion des CNR-Wertes (Carrier-to-noise ratio) und des CIM-Wertes (carrier-to-intermodulation ratio) definiert. Dem Sendeteil wird ein Signal Se mit einem Signal/Rausch-Verhältnis SNRin (signal-to-noise ratio) zugeführt, und der Empfangsteil liefert ein Ausgangssignal So mit einem Signal/Rausch-Verhältnis SNRout. Der totale SNR-Wert, der den dynamischen Bereich DR des Links bestimmt, bezieht sich auf die inkohärente Addition von Rauschen und Intermodulation. Zur Messung dieser analogen Werte werden sinusförmige Signale verwendet, während digitale Links durch digitale Signale und SNR oder BER-Werte spezifiziert sind. Die analogen Links müssen daher auch bezüglich der Intermodulation spezifiziert werden. Die Bitfehler-Wahrscheinlichkeit in einem digital modulierten Unterkanal am Ausgang des Systems ist grösser als an seinem Eingang infolge eines endlichen SNR-Wertes. **Fig. 2** zeigt beispielsweise die CNRlink-Anforderungen für einen gegebenen SNR-Eingangswert und eine annehmbare SNR-Degradation SNRout - SNRin wegen des endlichen SNR-Wertes des Links. Für die meisten Anwendungen wird bei analogen Systemen eine Subkanal-Modulation verwendet. Die Subkanäle selbst übertragen normalerweise digitale Daten. Das ganze System wird jedoch als analog betrachtet, weil die Interferenzen zwischen den Subkanälen deren SNR-Faktor reduzieren, was eine wegen der Nichtlinearität des Systems typische in digitalen Systemen nicht spezifizierte Eigenschaft eines analogen Systems ist. Demgegenüber ergibt die Erfindung einen bandbegrenzten "transparenten" Kanal, was ein ideales analoges System darstellt. Kommunikationssatelliten in geostationären Orbits weisen ein Frenquenzband von **10.7** bis **12.75** GHz auf, wobei man in Zukunft wahrscheinlich auch in einem Frequenzband von **21.4** bis **22.0** GHZ arbeiten wird.

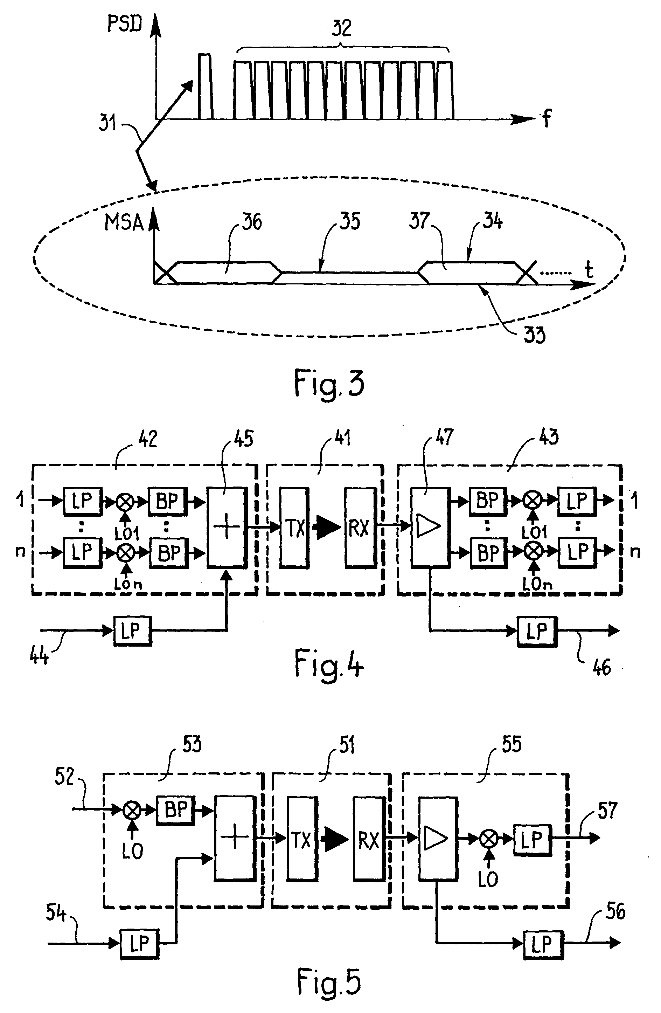

**Fig. 3** zeigt, dass nach der vorliegenden Erfindung zwei getrennte Bereiche der Bandbreite verwendet werden. Ein erster Bereich wird für einen Synchronisationskanal **31** mit einer kleinen Bandbreite zwischen **0** und einigen MHz, das heisst für Synchronisationsrahmen fester Datenrate reserviert, von denen in **Fig. 3** die Spektralleistungsdichte PSD in Funktion der Frequenz f und die Modulationssignalamplitude in Funktion der Zeit dargestellt sind. Der Synchronisationskanal **31** enthält Daten, das heisst Nullen und Einsen, und Syncbits im Zustand **"0.5"** für den Empfängerlokaloszillator. Bei einer Phasenmodulation (BPSK: binary phase shift keying) der Lichtwelle wird ein Datenbit **"0"** die Phase der Lichtwelle **33**, beispielsweise um <-**90°** im sendeseitigen optischen Modulator modulieren, während eine **"1"** einen Betrag von **90°** zur Phase der Lichtwelle **34** addiert. Demgegenüber addiert der **"0.5"** bzw. Syncbit den Betrag **0°** zur Phase der Lichtwelle **35**. Der Empfänger kann dann die **0°**-Phasenzustände, das heisst die Syncbits, extrahieren und die Synchronisierung des Lokaloszillators durchführen.

Es ist dabei zu beachten, dass das Syncbit von Bits symmetrischer Phasenzustände umgeben sein muss, weil es sonst im Empfänger nicht detektiert werden könnte. Zusätzlich zu verschiedenen Subkanälen **1** bis n ist vorzugsweise ein Syncbit-Rahmen-Kanal vorgesehen, über den beispielsweise erste Signalisierungsbits **36**, mindestens ein Syncbit **35** und zweite Signalisierungsbits **37** übertragen werden. Dieser Syncbitkanal **31** ist an sich dem Syncbit-Kanal eines digitalen Systems ähnlich, weist jedoch eine viel kleinere Bandbreite auf, beispielsweise in der Grössenordnung von einigen Mbits/s statt Gbits/s.

Der Unterschied zwischen dem Digitalbetrieb und dem Analogbetrieb liegt in den verschiedenen verwendeten optischen Phasenverriegelungsschleifen für die Synchronisation oder OPLL-Schleifen (optical phase-lock loop synchronisation). In einem System mit einer festen Datenrate wird die OPLL-Schleife mit Hilfe von die Länge eines Datenbits aufweisenden Syncbits durchgeführt, die jeweils nach der erwähnten vorbestimmten Anzahl Datenbits eingefügt werden. In analogem Betrieb wird ein Synchronisationsrahmen kleiner Bitrate mit den Syncbits und anderen Hilfsdaten übertragen, und zwar spektral getrennt von den eigentlichen Nutzdaten. Nach der vorliegenden Erfindung unterscheiden sich also beide Betriebsarten nur in der Syncbit-Verarbeitung, in einigen Filterfunktionen und in der Verarbeitung des Empfangssignals, wie zum Beispiel bei der Takt und Daten-Rückgewinnung im Digitalbetrieb mit einer festen Datenrate.

Dabei verfügt man andererseits über eine grosse Bandbreite **32** zwischen etwa **10** MHz und **1** GHz für den "transparenten Link" **32**. Innerhalb dieses transparenten Bandes **32** kann jedes Signal, das spektral darin passt, unabhängig von seiner Form durch einen solchen transparenten Link übertragen werden. Die Synchronisierung erfolgt auf jeden Fall durch den schmalen Kanal **31** unterhalb des transparenten Kanals **32**. Der Synchronisationskanal muss einen Rahmen mit Syncbits und Datenbits in symmetrischen Zuständen aufweisen, damit der Lokaloszillator den Synchronisationszustand erreichen kann.

Das Syncbit-Verfahren kann mit Hilfe von FPGA-Arrays (field programmable gate arrays) durchgeführt werden, die merklich kostengünstiger als die RFASIC-Schaltungen (radio frequency application specific integrated circuits) sind, die sich zur Syncbit-Verarbeitung in digitalen Systemen fester Datenrate als notwendig erweisen.

Die bekannten digitalen Systeme sind im Sinne der vorliegenden Erfindung nicht transparent, insofern sie eine stabile Datenrate aufweisen müssen, für die nur Abweichungen von wenigen Prozenten zulässig sind, und auch weil die Impulse mehr oder weniger rechteckförmig sein sollen, so dass die sogenannten analogen Signale mit beliebigen Wellenformen - für eine bestimmte Bandbreite - oder digitale Signale mit einer anderen als der gegebenen Datenrate grundsätzlich weder zulässig noch übertragbar sind.

Der transparente Kanal weist eine viel grössere Bandbreite auf und kann jedes Signal übertragen, dessen Spektrum in den Kanal passt. Wenn mehrere digitale oder analoge Signale übertragen werden müssen, wie dies bei der Fernseh-Satelliten-Kommunikation der Fall ist, trägt dieser Kanal mehrere Subkanäle. Wie in **Fig. 4** dargestellt, werden die Signale über den transparenten Kanal **41** übertragen. In der sendeseitigen Multiplexer-Einrichtung **42** kann in jedem Subkanal **1**,.... **n** ein Signal den entsprechenden Träger modulieren, bevor er zum optischen Link weitergeführt wird. Diese modulierten Träger können dann multiplexiert, und in einer Demultiplexer-Einrichtung **43** am Ende des Links werden die Subkanäle demultiplexiert und wieder heruntergemischt. Der sendeseitige Syncbit-Rahmen **44** wird vorzugsweise über ein Tiefpass-Filter einem Multiplexer **45** der Einrichtung **42** zugeführt, und der empfangsseitige Syncbit-Rahmen **46** wird vorzugsweise über ein Tiefpass-Filter von einem Demultilpexer **47** der Einrichtung **43** zurückgewonnen.

In einem Satelliten können die Subkanäle schon zu Mikrowellenträgern in der Grössenordnung von **10** GHz multiplexiert werden. Wie in **Fig. 5** dargestellt, werden die Signale über den transparenten Kanal **51** übertragen. Sendeseitig können die auf Mikrowellenträger multiplexierten Subkanäle **52** einer sendeseitigen Multiplexer-Einrichtung **53** zugeführt werden. Da das durch die Subkanäle besetzte Band relativ klein ist, beispielsweise kleiner als **1** GHz, verfährt man vorzugsweise so, dass zunächst das moduherte Mikrowellensignal in ein Band von etwa **10** MHz bis zu **1** GHz heruntergemischt wird. Ein solches Band wird über den optischen transparenten Intersatellitenlink **51** von einem Satelliten zu einem anderen übertragen, wo eine Demultiplexier-Einrichtung **55** den Synebit-Rahmen **56** durch Demultiplexierung zurückgewinnt. Das Signal wird wieder in den Mikrowellenbereich heraufgemischt, um eine weitere Mikrowellenübertragung, beispielsweise von einem Satelliten zur Erde zu ermöglichen. An Stelle von n Basisbandsignalen oder Subkanälen mit einer relativ kleinen Bandbreite kann auch ein breitbandiges analoges oder ein digitales Basisbandsignal hoher Bitrate übertragen werden.

Das Link-interface besteht aus mehreren parallelen Basisbad-Eingängen/Ausgängen bzw. aus einem einzelnen breitbandigen Eingang/Ausgang. Wenn nötig können Basisband-Prozessoren bei den Ein- und Ausgängen die parallelen schmalbandigen Kanäle in mit Subträgern entsprechend multiplexierte Subkanäle umwandeln. Das einzelne Eingangs-Breitband-Schema wird insbesondere verwendet, wenn ein mit Subträgern multiplexiertes Signal schon zum Eingang geliefert wurde und daher keine zusätzliche Signalverarbeitung mehr notwendig ist, oder wenn ein einzelnes Analog-Signal grosser Bandbreite oder ein digitales Datensignal hoher Bitrate übertragen werden muss.

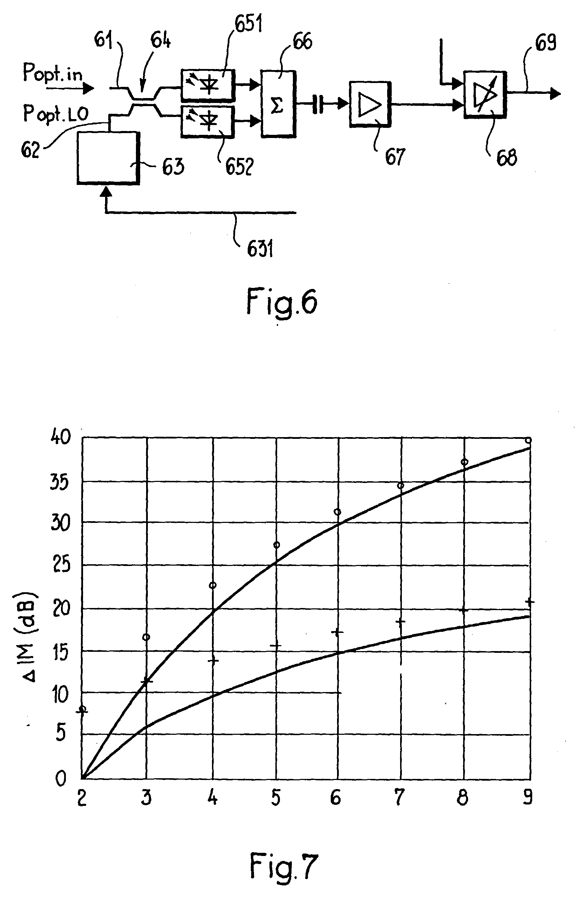

Der homodyne RFE-Empfänger (receiver front end) nach **Fig. 6** besteht beispielsweise aus einem gewöhnlichen balanzierten Empfänger. Das empfangene Licht **61** und das Laserlicht **62** eines Lokaloszillators **63** werden in einem optischen Hybrid-Koppler **64** gekoppelt und nachträglich durch zwei Photodioden **651, 652** detektiert. Die Photoströme von diesen Photodioden werden dann in einem Addierer **66** addiert und in einem Transimpedanz-Verstärker **67** in eine Spannung umgewandelt. Ein AGC-Verstärker (automatic gain control) **68** liefert schliesslich das verstärkte Signal **69**. Der Lokaloszillator **63** wird mit einem Signal **631** aus einer Syncbit-Verarbeitungs- und OPLL-Steuer-Einheit beaufschlagt.

Das Diagramm nach **Fig. 7** dient zur Berechnung der Zunahme der Intermodulation IM in dB in Bandmitte in Funktion der Anzahl n Träger über einen Link, der Nichtlinearitäten dritter und fünfter Ordnung aufweist, für die die folgenden auch für n > **9** anwendbaren Formeln gelten:

$$IM3 = 10 * \log 10(1.5 * n^2) \qquad\qquad \text{(3. Ordnung)}$$

$$IM5 = 10 * \log 10(0.24 * n^{4.8}) \qquad\qquad \text{(5. Ordnung)}$$

In **Fig. 7** sind die Näherungswerte der **3**. und **5**. Ordnung mit * bzw. ° bezeichnet. Die ausgezogenen Linien entsprechen den genauen Werten. Konventionelle optische Kommunikationssysteme arbeiten mit direkter oder indirekter Intensitätsmodulation. Im ersten Fall wird der Laserdioden-Injektionsstrom moduliert. Bei indirekter oder externer Intensitätsmodulation wirkt der Laser als CW-Quelle, und der Strahl wird durch einen externen Modulator beispielsweise vom Mach-Zehnder-Typ moduliert. Die Detektion wird entweder durch Messung der Intensität des modulierten Lichts mittels einer Photodiode ("direkte Detektion" oder "DD") oder kohärent, das heisst mit Hilfe eines Lokaloszillators und nachträglicher Mischung in einer Photodiode. In der Praxis sind solche DD-Systeme nicht sehr empfindlich.

Bei verlustreichen Links, beispielsweise bei Intersatellitenlinks können nur kohärente Systeme die erforderliche Empfindlichkeit gewährleisten. Wenn die resultierende Zwischenfrequenz des kohärenten Mischungsprozesses Null ist, spricht man von einer "homodynen" Detektion, anderenfalls von einer heterodynen. Im allgemeinen sind die homodynen Ausführungen empfindlicher, aber die heterodynen sind einfacher zu realisieren. Die empfindlichste bekannte Art ist die homodyne Phasenmodulation (PM).

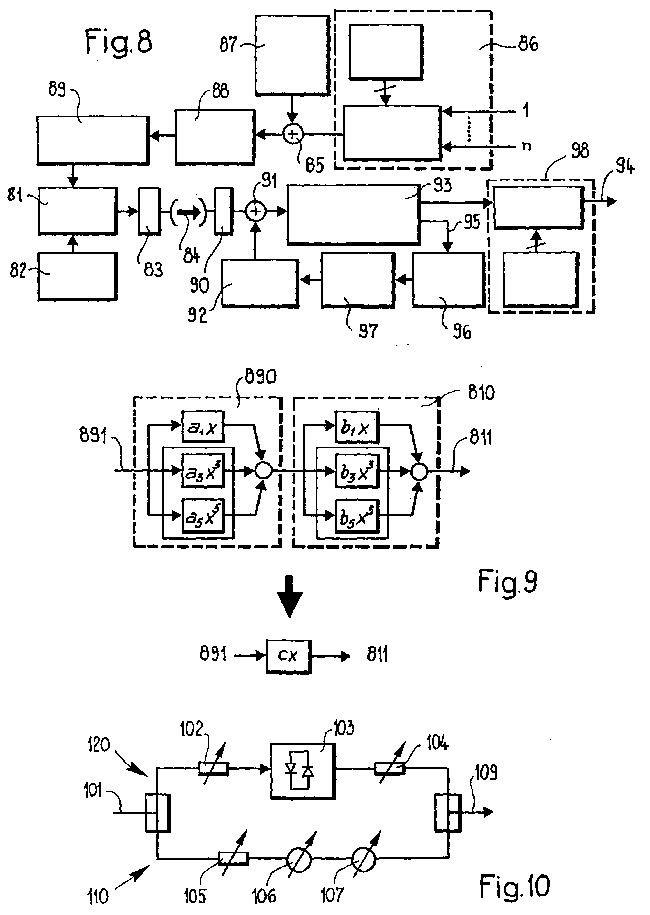

Das Kommunikationssystem nach **Fig. 8** umfasst einen elektrooptischen Phasenmodulator **81** zur Modulierung des Laserlichts eines TX-Lasers **82** und zur Weiterleitung des modulierten Laserlichts an das eine Ende **83** eines Übertragungssystems oder Links, der den Laserstrahl **84** sendet. An eine Verknüpfungsschaltung **85** sind eine sendeseitige Datensignaleinheit **86** und eine Syncbit-Einheit **87** angeschlossen. Die Schaltung **85** ist ausgangsseitig an einen elektrooptischen-Modulator-Treiber **88** angeschlossen, der über eine Korrekturschaltung **89** mit dem Eingang des elektrooptischen Phasenmodulators **81** verbunden ist. Die sendeseitige Datensignaleinheit **86** kann einen Umsetzer mit den notwendigen Mischern, Filtern und Lokaloszillatoren aufweisen, um die eingangsseitigen Subkanal-Signale **1**, ... **n** hinaufzumischen. Die Syncbit-Einheit **87** ist für die Syncbit-Erzeugung und Filterung vorgesehen. Der Modulator-Treiber **88** umfasst einen Verstärker mit Vorverstärker, und die Korrekturschaltung **89** dient vorzugsweise als Vordistorsions-Linearisierer. An das andere Ende **90** des Links ist eine Koppelschaltung **91** angeschlossen, die eingangsseitig auch mit einem Lokaloszillator-Laser **92** oder LO-Laser verbunden ist und deren Ausgangssignale einer optischen RX-Empfänger-Vorstufe **93** zugeführt werden, die nebst den Datensignalen **94** auch ein Syncbit-Signal **95** liefert, das über ein Filter **96** an eine Syncbit-OPLL-Schaltung **97** weitergeleitet wird. Für diese Datensigale kann eine empfangsseitige Datensignaleinheit **98** vorgesehen sein, die ebenfalls einen Umsetzer mit den notwendigen Mischern, Filtern und Lokaloszillatoren aufweist, um die ausgangsseitigen Subkanal-Signale herunterzumischen. Die wichtigste Distorsionsquelle wegen Intermodulation ergibt sich aus dem sogenannten Mach-Zehnder-Interferometer, bestehend aus einem Phasenmodulator und EFC/Photodioden (front end coupler). Die wichchstigste Rauschquelle ist das Shot-Rauschen des RFE/LO-Lasers (receiver front end).

Das Kommunikationssystem nach der vorliegenden Erfindung umfasst eine optische Phasenverriegelungsschleife, auch OPLL-Schleife (optical-phase-lock-loop) genannt, und einen Lokalosziilator, zu dessen Synchronisierung im Fall einer analogen Modulation zwei Methoden vorgesehen sind, wobei bei der einen ein Restpilotträger und bei der anderen eine sogenannte Syncbit-Technik verwendet wird. Bei der bevorzugten Syncbit-Technik werden sowohl Synchronisationsbits als auch Referenzbits in einem schmalen Spektralfenster ausserhalb der Übertragungsbandbreite übertragen, um eine OPLL-Phasensynchronisierung zu bewirken. Dieser Synchronisationskanal kann zudem für Signalisierungs- und Netzwerksteuerzwecke verwendet werden.

Da das erfindungsgemässe System ausgebildet ist, um beliebige Signale zu übertragen, werden vorzugsweise höhere Anforderungen an Linearität gestellt, als bei Anwendung für digitale Signale mit einer festen Übertragungsrate. Wenn bespielsweise zwei Hauptträgersignale der Frequenz **f1** bzw. **f2** und ein weiteres Trägersignal der Frequenz **f3 = 2.f2 - f1** übertragen werden, wird durch eine System-Nichtlinearität ungerader Ordnung ein Intermodulationsprodukt der Frequenz **f3** erzeugt. In einem digitalen System fester Datenrate oder in einem in digitalem Betrieb arbeitenden System nach der vorliegenden Erfindung bewirken solche statischen Nichtlinearitäten, und zwar sogar auch wenn sie sehr stark sind wie bei Verwendung von Begrenzern, keine Einbusse der Übertragungsqualität. Die digitalen Systeme fester Datenrate müssen jedoch rauscharm sein, um grosse Reichweiten zu erreichen. Die analogen System müssen jedoch zugleich rauscharm und sehr linear sein, das heisst sie müssen einen hohen dynamischen Bereich aufweisen.

Um eine hohe Empfindlichkeit zu erreichen wird nach der vorliegenden Erfindung vorzugsweise eine kohärente optische Phasenmodulation für beide Fälle verwendet. Bei Systemen mit festen Datenraten spricht man dann von einer kohärenten BPSK-Modulation (coherent binary phase shift keying) im Gegensatz zu einer kohärenten Phasenmodulation (coherent PM) im analogen Fall. Bei kohärenter Übertragung muss der Empfänger mit Hilfe eines Lokaloszillators die empfangene phasenmodulierte Lichtwelle zu einer Zwischenfrequenz heruntermischen. Wenn diese Zwischenfrequenz Null ist, wird die Lichtwelle nach dem sogenannten Homodynverfahren direkt nach Mischung mit dem Lokaloszillator mit Hilfe eines Photodetektors demoduliert. Vorzugsweise wird nach der vorliegenden Erfindung in beiden Fällen - analog und digital - dieses Homodynverfahren verwendet, da es das empfindlichste ist.

Zur Erhöhung des dynamischen Bereichs des Links kann der optische Phasenmodulator **81**, wo hauptsächlich die Nichtlinearität entsteht, mit Hilfe einer elektronischen breitbandigen Vordistorsions-Linearisierer-Schaltung **89** linearisiert werden, die zur Kompensation der sinusförmigen Charakteristik des Mischungs/Detektions-Prozesses eine arcsin-Übertragungscharakteristik aufweist.

Die Nichtlinearität der Phasenmodulator/Empfänger-Kombination ergibt sich aus der Mischung in den balanzierten Empfängerphotodioden.

Für das empfangene Laserlichtfeld gilt: $E_{in}(t) = E_{in,o}\sin[\omega_{in}t + \varphi(t)]$ worin $\varphi(t)$ die modulierte Phase ist.

Für das Lokaloszillatorlaserfeld gilt: $E_{Lo}(t) = E_{Lo,o}\sin[\omega_{Lo}t]$

Der Photostrom, das heisst die Intensitätsdetektion von $E_{in}(t) + E_{Lo}(t)$ ist

$$i_{det}(t) = i_{det,o}\sin[(\omega_{in} - \omega_{Lo})t + \varphi(t)]$$

Wenn der Phasen-Lock-Loop die Synchronisierung erreicht hat, sind $\omega_{in}$ und $\omega_{Lo}$ gleich, so dass $(\omega_{in} - \omega_{Lo})$ verschwindet:

$$i_{det,sync}(t) = i_{det,o}\sin[\varphi(t)]$$

Das detektierte Signal oder oder Photostrom ist nicht proportional zur Modulationsspannung, die der Phase $u_{mod}(t) = \varphi(t)$ entspricht, sondern zu seinem Sinus. Es ist nichtlinear verzerrt. Das sinusförmige verzerrte Signal ergibt sich näherungsweise aus einer Taylorreihe wie folgt:

$$i_{det,sync} = i_{det,o}\sin[\varphi] = i_{det,o}[\varphi - \varphi^3/3! + \varphi^5/5! - ...] = b_1 x + b_3 x^3 + b_5 x^5 + ...$$

Wenn das Modulationssignal, das proportional zur Phase $\varphi$ ist, mit einer arcsin-Funktion vorverzerrt ist, wird der detektierte Strom linear abhängig von der Modulation sein:

$$i_{det,sync,pred} = i_{det,o,pred}\sin[arcsin(\varphi)] = \varphi$$

Auch die arcsin-Funktion ergibt sich aus einer Taylorreihe wie folgt:

$$u_{mod,pred}(t)=u_{mod,o,pred}\arcsin[u_{mod,pred}(t)/u_{mod,o,pred}]=u_{mod,o,pred}\arcsin[x]=$$
$$= u_{mod,o,pred}[x+x^3/6+3x^5/40+...]=a_1 x+a_3 x^3+a_5 x^5+...$$

**Fig. 9** zeigt eine Näherung der Funktionen **890** und **810** des Linearisierers bzw. des Modulators/Empfängers, die eine linearisierte Kombination ergeben. Das Signal **891** entspricht der Eingangsspannung der Schaltung **89** (**Fig. 8**) und das Signal **811** der Ausgangsspannung des Phasenmodulators **81** (**Fig. 8**) bzw. des Empfängers.

Um die Verzerrungen dritter und fünfter Ordnung zu kompensieren, sind die Beziehungen zwischen den Koeffizienten $a_1$, $a_3$ und $a_5$ von Bedeutung. Zur Vorverzerrungslinearisierung, können folgende drei Näherungsverfahren angewendet werden:

a) Antiparallel-Schottky-Diodenschaltung als Nichtlinearität:

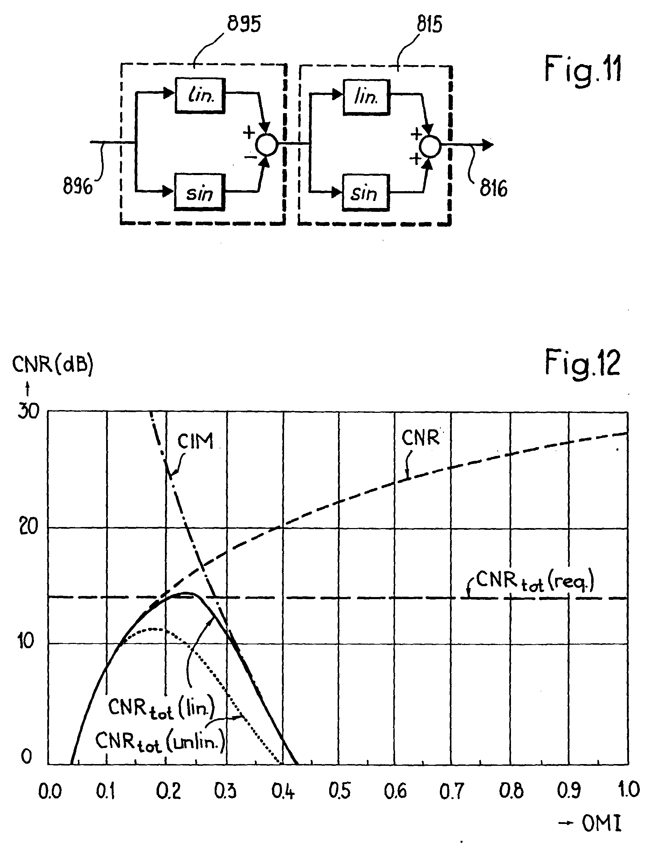

Das Eingangssignal **101** wird, wie in **Fig. 10** dargestellt, in einen linearen Zweig **110** und einen nichtlinearen Zweig **120** geteilt, in dem die Nichtlinearitäten **3**. und **5**. Ordnung durch ein Antiparallel-Schottky-Diodenpaar **103** erzeugt werden. Da die Nichtlinearität einer Schottky-Diode sich exponentiell verhält, weist die Nichtlinearität eines antiparallelen Diodenpaares ebenfalls einen exponentiellen Verlauf auf, und zwar ohne gerade Glieder und somit der Form

$$x +x^3/3!+x^5/5!$$

In dem nichtlinearen Zweig **120** sind auch zwei Dämpfungsglieder 102 und 104 mit Verstärkungsfaktoren $g_2$ bzw. $g_4$, die die Steuerung der Koeffizienten **3**. und **5**. Ordnung erlauben:

$$a_3 = g_2^3 g_4/ 3! \qquad a_5 = g_2^5 g_4 /5!$$

Bekannte Lineariser **3**. Ordnung verwenden nur ein dem Attenuator **104** entsprechendes Dämpfungsglied. Die Nichtlinearität **5**. Ordnung kann daher nicht kompensiert werden, ausser wenn die zu linearisierende Schaltung eine exponentielle Nichtlinearität aufweist. Im linearen Zweig **110** sind ein Attenuator **105**, ein variabler Phasenschieber **106** und eine variable Verzögerungsschaltung **107** in Reihe geschaltet. Der Attenuator **104** sowie der Phasenschieber **106** und die Verzögerungsschaltung **107** erlauben eine Kompensation der Koeffizienten $a_1$ erster Ordnung. Die Schaltung mit dem für eine Linearisierung dritter Ordnung an sich bekannten Attenuator **102** erlaubt erfindungsgemäss die Verwendung einer exponentiellen Nichtlinearität zur Erzeugung von beliebigen positiven Nichtlinearitäten dritter und fünfter Ordnung und daher die Kompensation von Schaltungen, die fast beliebige Nichtlinearitäten dritter und fünfter Ordnung aufweisen, um ein linearisiertes Ausgangssignal **109** zu liefern.

b) Kompensation einer eher schwachen Nichtlinearität durch eine negative sinusförmige Nichtlinearität gemäss **Fig. 11**, die eine Näherung der Funktionen **895** und **815** des Linearisierers bzw. des Modulators/Empfärigers zeigt, um eine linearisierte Kombination zu ergeben. Das Signal **896** entspricht der Eingangsspannung der Schaltung **89** (**Fig. 8**) und das Signal **816** der Ausgangsspannung des Phasenmodulators **81** (**Fig. 8**) bzw. des Empfängers.

Eine sinusförmige Nichtlinearität kann durch eine tanh-Funktion approximiert werden. Die tanh-Funktion kann durch eine kaskadierte Schaltung von zwei bipolaren Differentialverstärkern realisiert werden, wobei der erste nichtlinear und der zweite linear erregt wird. Die Differenz von zwei Kollektorströmen mit konstanter Summe, die von der Eingangsspannung exponentiell abhängig sind, realisieren die Näherung tanh = sin. Nach der vorliegenden Erfindung kann eine solche an sich bekannte "sin"-Schaltung zur Verbesserung der Linearität gemäss der in **Fig. 11** dargestellten Struktur verwendet werden.

c) CMOS-Schaltung. Die integrierten CMOS-Schaltungen (cross coupled differential pairs) weisen eine Spannungs/Strom-Nichtlinearität auf der Form

$$i(u) = c_1 u - u[(1 - u^2/c_2)]^2$$

die bei geeigneter Wahl der Koeffizienten $c_1$ und $c_2$ durch Transistor-Scaling die arcsin-Funktion approximieren:

$$i(u) = u + u^3/6 + 3u^5/40 +...$$

**Fig. 12** zeigt den dynamischen SNR-Bereich in Funktion des optischen Modulationsindexes OMI, wobei OMI = **1** einem Phasenwinkel von **90°** entspricht. Die Darstellung nach **Fig. 12** bezieht sich auf feste Werte der Signalleistung (**-53** dB), der Leistung des Lokaloszillators (**3** mW), der Anzahl Subkanäle (**12**) und der Bandbreite (**36** MHz; totale Bandbreite **500**MHz). Im Diagramm nach **Fig. 12** ist CIM das Träger/Intermodulation-Verhältnis, CNR das Träger/Rauschen-Verhältnis und $CNR_{tot}$ das Verhältnis zwischen dem Träger und der Summe von Rauschen und Intermodulation, und zwar $CNR_{tot(lin)}$ linearisiert, $CNR_{tot(unlin)}$ nichtlinearisiert und $CNR_{tot(req)}$ erwünscht. In **Fig 12** ist das Maximum der Kurve $CNR_{tot(lin)}$ deutlich grösser als als das Maximum der Kurve $CNR_{tot(unlin)}$. Daraus ergibt sich die Möglichkeit einer Übertragung über den "transparenten" Kanal nach der vorliegenden Erfindung, die demzufolge weitgehend eine gleichzeitige Unterdrückung der Intermodulationsprodukte dritter und fünfter Ordnung erlaubt.

## Patentansprüche

1. Optisches Intersatelliten-Kommunikationssystem zum Aussenden eines modulierten Laserstrahls (**3**),
   **dadurch gekennzeichnet, dass**
   zwei getrennte Bereiche der Bandbreite verwendet werden, derart dass ein erster Bereich für einen Synchronisationskanal (**31**) mit einer kleinen Bandbreite zur Übertragung von Synchronisationsrahmen mit einer festen Datenrate und ein zweiter Bereich mit einer grossen Bandbreite (**32**) für einen transparenten Link vorgesehen sind, wobei der Synchronisationskanal (**31**) Syncbits für den Empfängerlokaloszillator enthält.

2. Optisches Intersatelliten-Kommunikationssystem nach Anspruch **1**,
   **dadurch gekennzeichnet, dass**
   der transparente Link ausgebildet ist, um analoge Signale mit beliebigen Wellenformen oder digitale Signale mit einer anderen als einer gegebenen Datenrate zu übertragen.

3. Optisches Intersatelliten-Kommunikationssystem nach Anspruch **1** oder **2**,
   **dadurch gekennzeichnet, dass**
   Syncbits mit Hilfe von FPGA-Arrays (field programmable gate arrays) übertragen werden.

4. Optisches Intersatelliten-Kommunikationssystem nach einem der Ansprüche **1** bis **3**,
   **dadurch gekennzeichnet, dass**
   in einer sendeseitigen Multiplexer-Einrichtung (**42**) in Subkanälen (1, .... n) ein Signal einen entsprechenden Träger moduliert, bevor er zum optischen transparenten Link weitergeführt wird, dass diese modulierten Träger multiplexiert werden, und dass in einer empfangsseitigen Demultiplexer-Einrichtung (**43**) am Ende des Links die Subkanäle demultiplexiert werden.

5. Optisches Intersatelliten-Kommunikationssystem nach einem der Ansprüche **1** bis **4**,
   **dadurch gekennzeichnet, dass**
   der sendeseitige Syncbit-Rahmen (**44**) über ein Tiefpass-Filter einem Multiplexer (**45**) der Einrichtung (**42**) zugeführt wird, und dass der empfangsseitige Syncbit-Rahmen (**46**) über einen Tiefpass-Filter von einem Demultiplexer (**47**) der empfangsseitigen Demultiplexer-Einrichtung (**43**) zurückgewonnen wird.

6. Optisches Intersatelliten-Kommunikationssystem nach einem der Ansprüche **1** bis **5**,
   **dadurch gekennzeichnet, dass**
   in einem Satelliten die Subkanäle in einer sendeseitigen Multiplexer-Einrichtung (**53**) zu Mikrowellenträgern im GHz-Bereich multiplexiert werden, dass zunächst das modulierte Mikrowellensignal zumindest angenähert in ein Band im MHz-Bereich heruntergemischt wird, dass ein solches Band über den optischen transparenten Intersatellitenlink (**51**) von einem Satelliten zu einem anderen übertragen, wo in einer Demultiplexer-Einrichtung (**55**) der Syncbit-Rahmen (**56**) durch Demultiplexierung zurückgewonnen wird, dass das Signal wieder in den Mikrowellenbereich heraufgemischt wird, um eine weitere Mikrowellenübertragung zu ermöglichen.

7. Optisches Intersatelliten-Kommunikationssystem nach einem der Ansprüche **1** bis **6**,
   **dadurch gekennzeichnet, dass**
   eine Anzahl n Basisbandsignale oder Subkanäle mit einer relativ kleinen Bandbreite oder ein breitbandiges analoges oder ein digitales Basisbandsignal hoher Bitrate übertragen werden.

8. Optisches Intersatelliten-Kommunikationssystem nach einem der Ansprüche **1** bis **7**,
   **dadurch gekennzeichnet, dass**
   ein homodyner balanzierter RFE-Empfänger vorhanden ist, in dem das empfangene Licht (**61**) und das Laserlicht (**62**) eines Lokaloszillators (**63**; **92**) in einem optischen Hybrid-Koppler (**64**; **91**) gekoppelt und nachträglich durch zwei Photodioden (**651**, **652**) detektiert werden, dass die Photoströme von diesen Photodioden in einem Addierer (**66**) addiert und in einem Transimpedanz-Verstärker (**67**) in eine Spannung umgewandelt werden, und dass der Lokaloszillator (**63**; **92**) mit einem Signal (**631**) aus einer Syncbit-Verarbeitungs- und OPLL-Steuer-Einheit (**97**) beaufschlagt wird.

9. Optisches Intersatelliten-Kommunikationssystem nach einem der Ansprüche **1** bis **8**,
   **dadurch gekennzeichnet, dass**
   zur Erhöhung des dynamischen Bereichs des Links dem optischen Phasenmodulator (**81**) eine elektronische breitbandige (**89**) Vordistorsions-Linearisierer-Schaltung (**81**) vorgeschaltet ist, die zur Kompensation der sinusförmigen Charakteristik des Mischungs/Detektions-Prozesses eine arcsin-Übertragungscharakteristik aufweist.

10. Optisches Intersatelliten-Kommunikationssystem nach Anspruch **9**,
    **dadurch gekennzeichnet, dass**
    die Vordistorsions-Linearisier-Schaltung (**81**) ausgebildet ist, um Intermodulationsprodukte dritter und fünfter Ordnung zu unterdrücken.

Fig.1

Fig.2

Fig. 3

Fig. 4

Fig. 5

Fig.6

Fig.7

Fig.8

Fig.9

Fig.10

Fig.11

895

815

lin.

lin.

896

sin

sin

816

+
−

+
+

Fig.12

CNR (dB)

30

CIM

CNR

20

CNR_tot (req.)

10

CNR_tot (lin.)

CNR_tot (unlin.)

0

0.0   0.1   0.2   0.3   0.4   0.5   0.6   0.7   0.8   0.9   1.0

→ OMI

13

Europäisches
Patentamt

**EUROPÄISCHER RECHERCHENBERICHT**

Nummer der Anmeldung

EP 00 11 2884

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| A | DE 21 22 721 A (LICENTIA GMBH) 30. April 1975 (1975-04-30) * Anspruch 1 * | 1,4,6,7 | H04B10/105 H04L7/04 H04B7/208 |
| A | PATENT ABSTRACTS OF JAPAN vol. 013, no. 288 (E-781), 30. Juni 1989 (1989-06-30) & JP 01 071223 A (TOSHIBA CORP), 16. März 1989 (1989-03-16) * Zusammenfassung * | 1,6,7 | |

**RECHERCHIERTE SACHGEBIETE (Int.Cl.7)**

H04B
H04L

Der vorliegende Recherchenbericht wurde für alle Patentansprüche erstellt

| Recherchenort | Abschlußdatum der Recherche | Prüfer |
|---|---|---|
| DEN HAAG | 16. November 2000 | Goudelis, M |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus anderen Gründen angeführtes Dokument
.....................................................................
& : Mitglied der gleichen Patentfamilie, übereinstimmendes
    Dokument

EPO FORM 1503 03.82 (P04C03)

## ANHANG ZUM EUROPÄISCHEN RECHERCHENBERICHT
## ÜBER DIE EUROPÄISCHE PATENTANMELDUNG NR.

EP 00 11 2884

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

16-11-2000

| Im Recherchenbericht angeführtes Patentdokument | Datum der Veröffentlichung | Mitglied(er) der Patentfamilie | Datum der Veröffentlichung |
|---|---|---|---|
| DE 2122721 A | 30-04-1975 | KEINE | |
| JP 01071223 A | 16-03-1989 | KEINE | |